# EUROPEAN PATENT APPLICATION

(11) **EP 4 349 872 A1**
(43) Date of publication of application: **10.04.2024**
(21) Application number: 22816192.3
(22) Date of filing: 02.06.2022
(51) Int. Cl.: C08B 37/00, C08B 3/16

(54) **ß GLUCAN ESTER DERIVATIVE**

(30) Priority: 03.06.2021 JP 2021093726
(71) Applicant: LIXIL Corporation, Tokyo 141-0033 (JP)
(72) Inventor: TANAKA, Jun, Tokyo 136-8535 (JP)
(74) Representative: Grünecker Patent- und Rechtsanwälte PartG mbB
(86) International application number: PCT/JP2022/022474
(87) International publication number: WO 2022/255447

(57) **Abstract**

Provided is a β glucan ester derivative having preferable water resistance and heat resistance and being capable of achieving both rigidity and flexibility. The β glucan ester derivative has an acyl group having 3 carbon atoms and an acyl group having 6 to 8 carbon atoms, and the β glucan ester derivative is a β-1,3-glucan ester derivative or a β-1,4-glucan ester derivative, and the β glucan ester derivative has a flexural strength at 80°C of 8 MPa or more and a flexural modulus at 80°C of 250 MPa or more.

## Description

### TECHNICAL FIELD

The present disclosure relates to a β glucan ester derivative.

In recent years, technologies related to the production of bioplastics from microorganisms and plants have been proposed for environmental protection. Known examples of bioplastics produced from microorganisms are β-1,3-glucan ester derivatives obtained through esterification of at least some of the hydroxy groups in β-1,3-glucan with an acid or the like.

Molding of the β-1,3-glucan ester derivative or a β-1,4-glucan ester derivative, which has a similar structure thereto, and their use for various applications has been studied. Conventionally, in relation to a β-1,3-glucan ester derivative, a technology has been disclosed which achieves its mechanical properties and thermoplasticity, for example, through the introduction of a long-chain component having 14 or more carbon atoms (for example, Patent Document 1).

### Citation List

### Patent Document

Patent Document 1: PCT International Publication No. WO2020/013232

### DISCLOSURE OF THE INVENTION

### Problems to be Solved by the Invention

The technology disclosed in Patent Document 1 does not achieve sufficient water resistance and heat-resistance for use in applications in housing equipment or wet areas in houses, and is disadvantageous from the viewpoint of achieving both rigidity and flexibility.

The present disclosure has been made in view of the circumstances mentioned above, and it is an object of the present disclosure to provide a β glucan ester derivative having preferable water resistance and heat resistance and additionally being capable of achieving both rigidity and flexibility.

### Means for Solving the Problems

The present disclosure relates to a β glucan ester derivative having an acyl group having 3 carbon atoms and an acyl group having 6 to 8 carbon atoms, wherein the β glucan ester derivative is a β-1,3-glucan ester derivative or a β-1,4-glucan ester derivative, and the β glucan ester derivative has a flexural strength at 80°C of 8 MPa or more and a flexural modulus at 80°C of 250 MPa or more.

### BRIEF DESCRIPTION OF THE DRAWINGS

FIG. 1 is a graph showing the temperature dependence of the flexural strengths of an Example and a Comparative Example;
FIG. 2 is a graph showing the temperature dependence of the flexural moduli of an Example and a Comparative Example;
FIG. 3 is a graph showing the relationship between the flexural strength and the degree of substitution by Pr in Examples; and
FIG. 4 is a graph showing the relationship between the flexural modulus and the degree of substitution by Pr in Examples.

### PREFERRED MODE FOR CARRYING OUT THE INVENTION

According to the present embodiment, a β glucan ester derivative is a β-1,3-glucan ester derivative or a β-1,4-glucan ester derivative. The β glucan ester derivative is a polymer in which a plurality of glucoses are linked via glycosidic linkages. The β-1,3-glucan ester derivative has, as the main chain, a β glucan composed of β-1,3-glycosidic linked glucose units. The β-1,4-glucan ester derivative has, as the main chain, a β glucan composed of β-1,4-glycosidic linked glucose units.

### β-1,3-Glucan Ester Derivative

In an embodiment of the present disclosure, the β-1,3-glucan ester derivative is preferably a curdlan ester derivative or a paramylon ester derivative. Both of curdlan and paramylon are derived from microorganisms. These materials can be esterified to form ester derivatives, and microorganism-derived plastics can be produced using such ester derivatives. Curdlan and paramylon are each a type of polysaccharide, a β-1,3-glucan. Although derived from microorganisms, the curdlan ester derivatives and paramylon ester derivatives according to the present embodiment have a strength similar to, for example, that of polypropylene and have high moldability.

The structure of curdlan is represented by Formula (1). Curdlan is a β-1,3-glucan, which is a polysaccharide found in soil bacteria. Curdlan has a molecular weight of about 1,000,000, and its derivative is characterized by having high strength but low fluidity. In Formula (1), n1 represents an integer of 1000 to 6200. A curdlan ester derivative represented by Formula (2) is obtained by esterifying at least some of the hydroxyl groups in curdlan as described in detail later. The esterification may be carried out using conventionally known techniques.

The structure of paramylon is represented by Formula (3). Paramylon is a β-1,3-glucan, which is a polysaccharide found in green algae. Paramylon has a molecular weight of about 300,000, and its derivative is characterized by having high flowability but low strength. In Formula (3), n2 represents an integer of 300 to 2000. A paramylon ester derivative having a structure represented by Formula (4) is obtained by esterifying at least some of the hydroxyl groups in paramylon as described in detail later. The esterification may be carried out using conventionally known techniques.

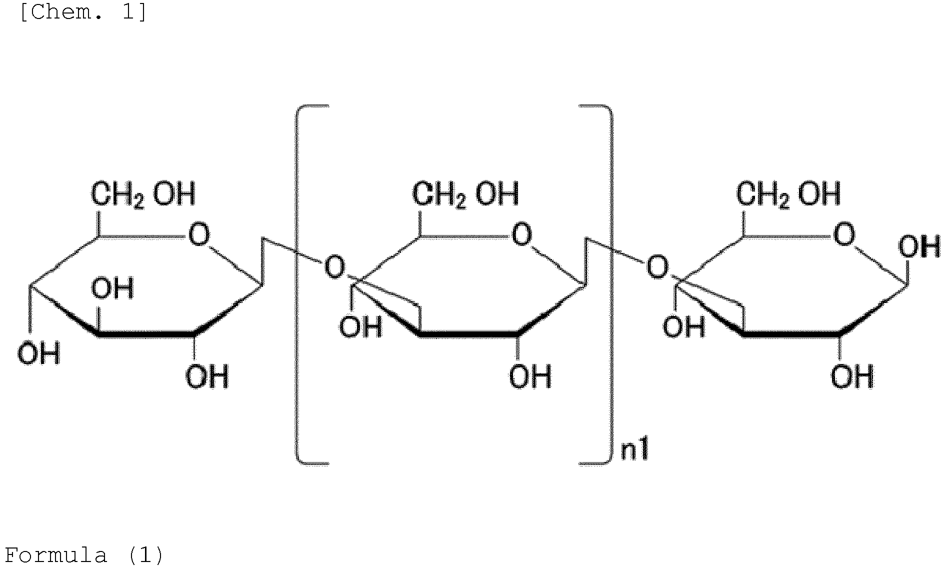

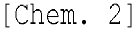

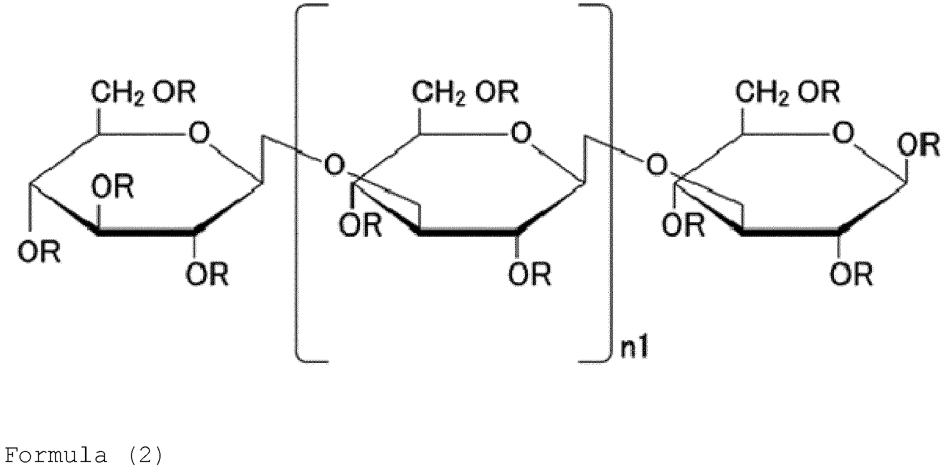

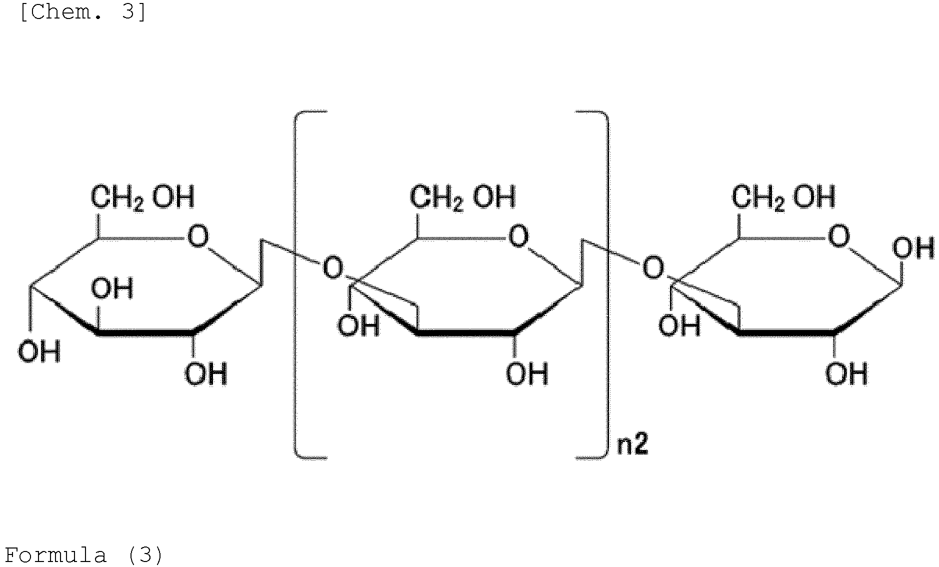

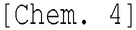

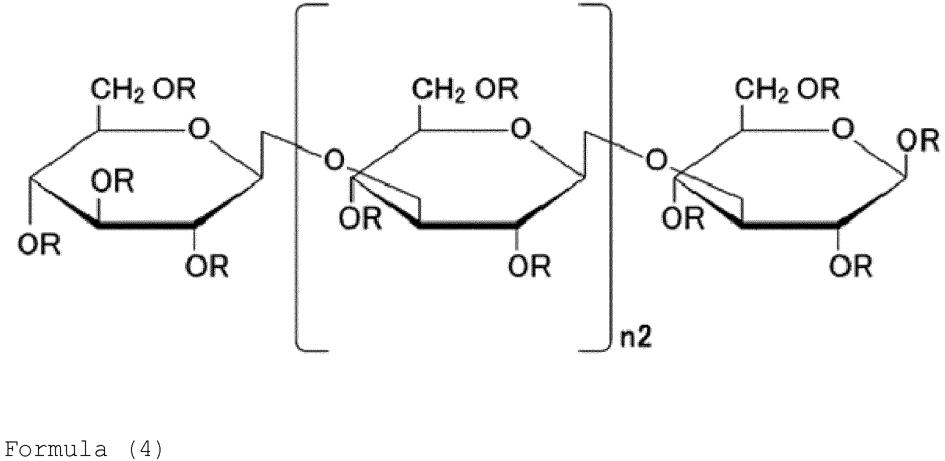

In the above formulas (2) and (4), R each independently represents a hydrogen atom, an acyl group having 3 carbon atoms (hereinafter, also referred to as a "short-chain component"), or an acyl group having 6 to 8 carbon atoms (hereinafter, also referred to as a "long-chain component"). However, at least one of R represents an acyl group having 3 carbon atoms, at least one of R represents an acyl group having 6 to 8 carbon atoms, and all of R do not represent hydrogen atoms at the same time. In Formula (2), n1 represents an integer of 1000 to 6200. In Formula (4), n2 represents an integer of 300 to 2000. This allows for their syntheses in a shorter time period than when only the long-chain component is introduced as a substituent. Specifically, the syntheses can be performed in a shorter time period than when a component having more than 8 carbon atoms as a long-chain component is introduced as a substituent. Further, since the β-1,3-glucan ester derivative is a heteroester having different types of substituents, i.e., the short-chain component and the long-chain component, the crystallinity or thermal properties such as glass transition temperature, melt viscosity, and the like of the molded article made thereof can be easily controlled, and therefore the injection moldability, rigidity, and flexibility can be adjusted to a preferable range. The β-1,3-glucan ester derivative according to the present embodiment preferably contains no acyl group having 4 to 5 carbon atoms. This makes it possible to suppress the odor, such as peculiar odor, of the molded article, and to apply the molded article to wet areas in houses, housing equipment, or the like.

The sum of the degree of substitution DSs by the short-chain component (hereinafter, also referred to as "the degree of substitution DSs") and the degree of substitution DSl by the long-chain component (hereinafter, also referred to as "the degree of substitution DSl") in Formula (2) is referred to as overall degree of substitution DSs+DSl (hereinafter, also referred to as "DSs+DSl"). The overall degree of substitution DSs+DSl is preferably 2.0 or more from the viewpoint of improving water resistance (hydrolysis resistance) and long-term durability required for use in wet areas in houses and house equipment. The degree of substitution DSs and the degree of substitution DSl as used herein mean the average number of hydrogen atoms substituted by the short-chain component and the long-chain component per glucose unit, respectively. A DSs+DSl of less than 2.0 leads to a higher proportion of the hydroxyl groups remaining in the molecule, so that preferable water resistance and long-term durability are less likely to be obtained. The DSs+DSl is more preferably 2.5 or more, and still more preferably 3.0.

In the β-1,3-glucan ester derivative, the ratio DSs:DSl of the degree of substitution DSs to the degree of substitution DSl is preferably 2.5:0.5 to 2.8:0.2. This ratio enables the β-1,3-glucan ester derivative to have a flexural strength at 80°C of 8 MPa or more and a flexural modulus at 80°C of 250 MPa or more. Further, it is possible to achieve both the rigidity and the flexibility of the resulting molded article. In view of the above, the DSs:DSl of the β-1,3-glucan ester derivative is more preferably 2.6:0.4 to 2.8:0.2, and still more preferably 2.7:0.3 to 2.8:0.2. The degree of substitution DSs and the degree of substitution DSl can be measured, for example, by ¹H NMR.

The structures of the acyl group having 3 carbon atoms and the acyl group having 6 to 8 carbon atoms is not particularly limited as long as they satisfy the respective conditions with regard to the number of carbon atoms. The bonds between carbons may be saturated bonds or may include an unsaturated bond. In addition to the above, the acyl groups may have any of a linear structure, a branched structure, and a cyclic structure. Examples of such acyl groups include a propanoyl group, which is a saturated aliphatic acyl group having 3 carbon atoms and a linear structure, an isopropanoyl group, which has a branched structure, a cyclopropanoyl group, which has a cyclic structure, an n-hexanoyl group, an n-heptanoyl group, and an n-octanoyl group, which are saturated aliphatic acyl groups having 6 to 8 carbon atoms and a linear structure, an isohexanoyl group, an isoheptanoyl group, and an isooctanoyl group, which have a branched structure, a cyclohexanoyl group, a cycloheptanoyl group, and a cyclooctanoyl group, which have a cyclic structure, a hexenoyl group, a heptenoyl group, and an octenoyl group, which have an unsaturated bond, and an acetylphenyl group, which has an aromatic ring, and the like.

The hydrogen atoms in the hydroxyl groups of the β-1,3-glucan are substituted by a short-chain component and a long-chain component by esterification as described above. A technique for the esterification of the β-1,3-glucan according to the present disclosure is not particularly limited, and examples thereof include a TFAA method and an acid chloride method. The acid chloride method involves heating the β glucan and an acid chloride in a solvent in the presence of a chlorine-trapping component (pyridine, or the like) to cause dehydrochlorination and the replacement of hydrogen atoms of the hydroxyl groups of the β glucan with an acyl group to occur, and thereby to allow the esterification to proceed. The TFAA method involves heating the β glucan and carboxylic acid in a solvent in the presence of trifluoroacetic anhydride (TFAA) as an acid catalyst to cause dehydrative condensation to occur, and thereby to allow the esterification to proceed.

Acid chlorides used for esterification in the acid chloride method include acid chlorides having the number of carbon atoms and the structure corresponding to the short-chain component and the long-chain component. Examples of an acid chloride used to introduce a saturated aliphatic acyl group having 3 carbon atoms include propionyl chloride. Examples of an acid chloride used to introduce a long-chain component being a saturated aliphatic acyl group having 6 to 8 carbon atoms and having a linear structure include hexanoyl chloride, heptanoyl chloride and octanoyl chloride. In addition to the above, the acid chloride may have a branched structure, a cyclic structure, or an unsaturated bond. In the acid chloride method, N-methyl-2-pyrrolidone (NMP) is preferable as an esterification solvent used in the esterification using the chloride. In this esterification, pyridine is preferably used in combination for the purpose of trapping chlorine. The pyridine captures the eliminated chlorine to form a pyridine hydrochloride.

Acids used for the esterification in the TFAA method include carboxylic acids having the number of carbon atoms and the structure corresponding to the short-chain component and the long-chain component. Examples of a carboxylic acid used to introduce a saturated aliphatic acyl group having 3 carbon atoms include propionic acid. Examples of a carboxylic acid used to introduce a long-chain component being a saturated aliphatic acyl group having 6 to 8 carbon atoms and having a linear structure include n-hexanoic acid, n-heptanoic acid, and n-octanoic acid. Similarly, isohexanoic acid, isoheptanoic acid, and isooctanoic acid, which have a branched structure, cyclohexanecarboxylic acid, cycloheptanecarboxylic acid, and cyclooctanecarboxylic acid, which have a cyclic structure, hexenic acid, heptenoic acid, and octenoic acid, which have an unsaturated bond, benzoic acid, which has an aromatic ring, and the like. The acid can also function as a solvent for the β-1,3-glucan ester derivative produced. In the TFAA method, trifluoroacetic anhydride is used in combination as the acid used as the solvent.

### β-1,4-Glucan Ester Derivative

The structure of β-1,4-glucan is represented by Formula (5), and the β-1,4-glucan is a polymer which includes a plurality of glucoses bonded via β-1,4-glycosidic linkages, and examples thereof include plant-derived celluloses. In Formula (5), n3 represents an integer of 300 to 2000. The structure of the β-1,4-glucan ester derivative is represented by Formula (6), and Formula (6) represents a structure in which at least some of the hydrogen atoms of the hydroxyl groups of the β-1,4-glucan is substituted by the short-chain component and the long-chain component. The β-1,4-glucan ester derivative can be synthesized by esterification similar to the esterification used to produce the β-1,3-glucan ester derivative.

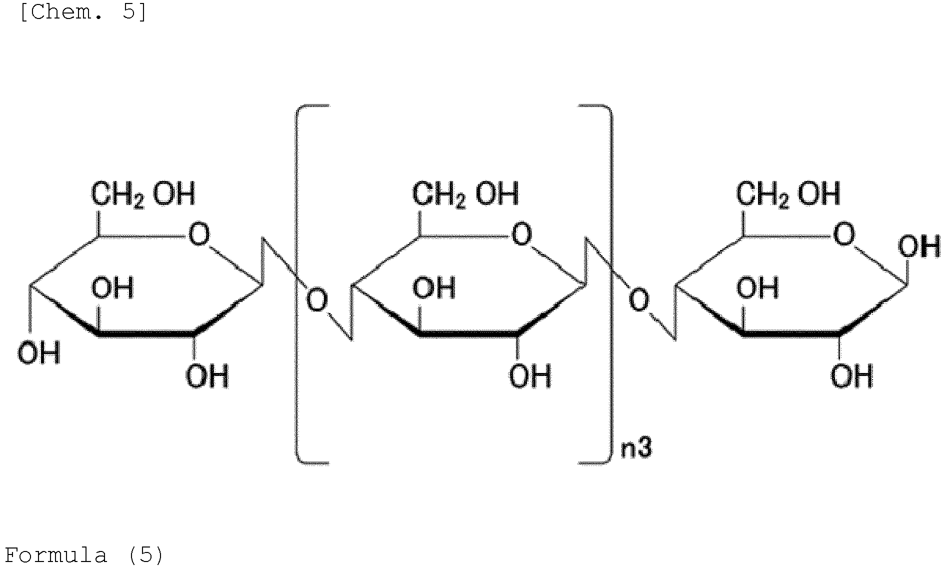

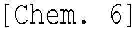

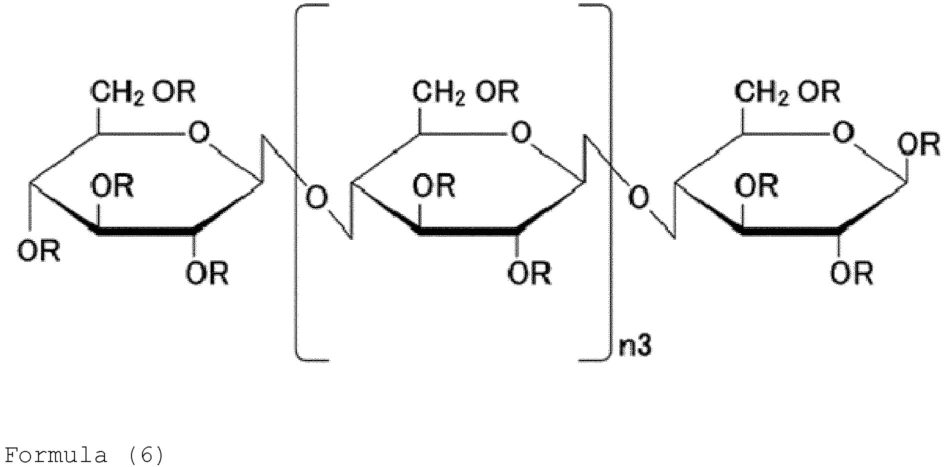

In Formula (6), R independently represents a hydrogen atom, an acyl group having 3 carbon atoms (hereinafter, also referred to as a "short-chain component"), or an acyl group having 6 to 8 carbon atoms (hereinafter, also referred to as a "long-chain component"). However, at least one of R represents an acyl group having 3 carbon atoms, at least one of R represents an acyl group having 6 to 8 carbon atoms, and all of R do not represent hydrogen atoms at the same time. In Formula (6), n3 represents an integer of 300 to 2000.

In the β-1,4-glucan ester derivative, the overall degree of substitution DSs+DSl, which is defined similarly to the DSs+DSl for the β-1,3-glucan ester derivative, is preferably 2.0 or more. The DSs+DSl is more preferably 2.5 or more, and still more preferably 3.0. The β-1,4-glucan ester derivative preferably contain no acyl group having 4 to 5 carbon atoms.

In the β-1,4-glucan ester derivative, the ratio DSs:DSl of the degree of substitution DSs to the degree of substitution DSl is preferably 1.5:1.5 to 2.2:0.8. This ratio enables the β-1,4-glucan ester derivative to have a flexural strength at 80°C of 8 MPa or more and a flexural modulus at 80°C of 250 MPa or more. Further, it is possible to achieve both the rigidity and the flexibility of the resulting molded article. In view of the above, the DSs:DSl of the β-1,4-glucan ester derivative is more preferably 1.9:1.1 to 2.2:0.8, and still more preferably 1.9:1.1 to 2.1:0.9. The degree of substitution DSs and the degree of substitution DSl can be measured, for example, by ¹H NMR.

The β glucan ester derivative according to the present embodiment has a flexural strength at 80°C of 8 MPa or more and a flexural modulus at 80°C of 250 MPa or more. Given that polypropylenes have a flexural strength at 80°C of about 8 MPa and a flexural modulus at 80°C of about 250 MPa, the β glucan ester derivative according to the present embodiment has higher heat resistance than the polypropylenes. Therefore, the β glucan ester derivative can be preferably applied to housing equipment and wet areas in houses. The β glucan ester derivative preferably has a glass transition temperature (Tg) of 100°C or higher.

Purification Method of β Glucan Ester Derivative According to an embodiment of the present disclosure, a method of purifying a β glucan ester derivative includes, for example, a precipitation step for mixing a reprecipitation solvent and a synthetic reaction liquid containing the β glucan ester derivative, and a cooling step for lowering the temperature of at least one selected from the reprecipitation solvent or the synthetic reaction liquid. In addition to the steps mentioned above, the method may include a washing step for washing the precipitate obtained in the precipitation step.

### Precipitation Step

The precipitation step is a step for mixing a reprecipitation solvent and a synthetic reaction liquid containing a β glucan ester derivative produced by esterification of at least some of the hydroxy groups in a β glucan ester derivative. In the precipitation step, the β glucan ester derivative is precipitated or re-precipitated.

The reprecipitation solvent may consist of, for example: a good solvent in which the β glucan ester derivative is substantially soluble; and a poor solvent in which the β glucan ester derivative is substantially insoluble. In the precipitation step, the reprecipitation solvent may be mixed with the synthetic reaction liquid to obtain a precipitate including the β glucan ester derivative. In the precipitation step, the reprecipitation solvent is preferably added to and mixed with the synthetic reaction liquid. More preferably, the good solvent is added to the synthetic reaction liquid to dissolve the synthetic reaction liquid therein, and then the poor solvent is added dropwise to the resulting solution. This prevents precipitation at the interface between the synthetic reaction liquid and the solvent and suppresses aggregation of precipitates. Moreover, the precipitation step can be performed in a single vessel.

The good solvent may be any solvent in which the β glucan ester derivative is substantially soluble. For example, the good solvent is preferably: a ketone such as acetone and methyl isobutyl ketone; an ether such as tetrahydrofuran, 1,4-dioxane, and methylal; an ester such as butyl acetate and propylene glycol-1-monomethylether-2-acetate; an aromatic compound such as toluene, chlorobenzene, and α-dichlorobenzene; chloroform, N,N-dimethylformamide, N-methyl-2-pyrrolidone, or the like. Additionally, when a washing step for washing the re-precipitated product is added, it is preferable to use a good solvent capable of washing off the impurities used for esterifying from the re-precipitated product. A single good solvent may be used, or a mixture of two or more good solvents may be used.

The poor solvent is such that the β glucan ester derivative is substantially insoluble in it and that the β glucan ester derivative has lower solubility in it than at least in the good solvent. Specifically, the poor solvent is preferably water. A single poor solvent may be used, or a mixture of two or more poor solvents may be used.

### Cooling Step

A cooling step is a step for lowering the temperature of at least one selected from the synthetic reaction liquid or the reprecipitation solvent. For example, the cooling step may include cooling at least one selected from the synthetic reaction liquid or the reprecipitation solvent before the mixing of the synthetic reaction liquid and the reprecipitation solvent in the precipitation step. Alternatively, the cooling step may include cooling a mixture solution obtained by mixing of the synthetic reaction liquid and the reprecipitation solvent in the precipitation step. The cooling step improves the yield of the β glucan ester derivative.

### Washing Step

A washing step is a step for washing the precipitate including the β glucan ester derivative obtained in the precipitation step. The washing step removes impurities contained in the precipitate. The washing step may be performed using any appropriate solution in which the β glucan ester derivative is substantially soluble. When the acid chloride method is used as a technique for the esterification, the impurities include reaction products of chlorine and pyridine or the like used as a chlorine-catching agent (e.g., pyridine hydrochloride and propionic acid). When the TAFF method is used as a technique for the esterification, the impurities include an acid used for esterification, and the like. When the TAFF method is used as a technique for the esterification, the washing step is preferably performed using a solution in which the acid used for the esterification is soluble. The washing step may be performed using any known method.

The β glucan ester derivative purified by the purification method according to the embodiment may be molded by any of various molding methods. Examples of suitable molding methods include injection molding, casting, compression molding, inflation molding, and other commonly used methods. Since the β glucan ester derivative according to the present embodiment has a preferable melt viscosity, it is preferably molded by an injection molding, in particular. The resulting molded product may be used for various applications, such as articles for wet areas in houses, which are used in wet areas of a bathtub or a kitchen in houses, housing equipment, and exterior materials of houses.

The embodiments described above are not intended to limit the present disclosure and may be altered or modified as long as the object of the present disclosure can be achieved, and such altered or modified versions will fall within the scope of the present disclosure.

### EXAMPLES

Hereinafter, the present disclosure will be described in more detail with reference to examples, which are not intended to limit the present disclosure.

### <Example 1>

Paramylon (weight average molecular weight: about 300,000) as a β glucan, dehydrated N-methyl-2-pyrrolidone (NMP; manufactured by Fujifilm Wako Pure Chemical Corporation) as a solvent, and dehydrated pyridine (manufactured by Fujifilm Wako Pure Chemical Corporation) as a chlorine catching agent in the respective predetermined amounts were placed in a reaction vessel at room temperature, and stirred for 5 hours. Then, the mixture was cooled to -10°C or lower overnight with continued stirring. Next, propionyl chloride and hexanoyl chloride (each manufactured by Fujifilm Wako Pure Chemical Corporation) as premixed acid chlorides were slowly added dropwise to the paramylon solution, and the mixture was stirred at 90°C for 4 hours to carry out an esterification reaction. Next, the resulting reaction solution was cooled to 65°C, and methanol was added dropwise to stop the reaction. Then, pure water at 40°C was added dropwise to the resulting reaction solution to cause reprecipitation. Next, the filter cake obtained by filtration of the reprecipitates was repeatedly washed with a washing solution and filtered until the pH of the filtrate reached 7, and the filter cake was vacuum-dried at 70°C to obtain a β glucan ester derivative of Example 1.

### <Example 2 and Comparative Examples 1 to 4>

β glucan ester derivatives according to Example 2 and Comparative Examples 1 to 4 were obtained in a similar manner to Example 1 except that the β glucans shown in Table 1 were used, stearoyl chloride (manufactured by Tokyo Chemical Industry) was used instead of hexanoyl chloride in Comparative Example 1, and the proportion of each acid chloride was adjusted so that the carbon chain ratio (Dss:Dsl) was as shown in Table 1. The short-chain component type "Pr" shown in Table 1 represents a propanol group, which is a saturated aliphatic acyl group having 3 carbon atoms. The long-chain component type "He" represents an n-hexanoyl group, which is a saturated aliphatic acyl group having 6 carbon atoms, and "St" represents a stearoyl group, which is a saturated aliphatic acyl group having 18 carbon atoms.

### Measurement of Degree of Substitution

For the β glucan ester derivatives of the above Examples and Comparative Examples, the degrees of substitution by the short-chain component and the long-chain component were measured by ¹H NMR (JNM-ECA (500 MHz), JEOL). Chloroform-d (99.8 ATOM %) manufactured by Wako Pure Chemical Corporation was used as a solvent for the measurement. The degrees of substitution by the short-chain component and the long-chain component were calculated based on the ratios of the peak areas of the substituents corresponding to the short-chain component and the long-chain component to the peak area of the ring proton (s) in the glucose unit in the ¹H NMR spectrum. The sum of the degree of substitution (DSs) by the short-chain component and the degree of substitution (DSl) by the long-chain component when the maximum degree of substitution per glucose unit was designated as 3 was defined as an overall degree of substitution. The results are shown in Table 1.

### Measurement of Tm and Tg

For the β glucan ester derivatives of the above Examples and Comparative Examples, the melting point (Tm, °C) and the glass transition temperature (Tg, °C) were measured using DSC (EXSTAR DSC7020, manufactured by Hitachi High-Tech Science Corporation). A sample was put into an aluminum pan, and the temperature of the sample was raised from 30°C to 250°C at a temperature-raising rate of 20°C/min, and after reaching 250°C, the temperature was maintained for 1 minute. Thereafter, the temperature was lowered to -60°C at a temperature-lowering rate of 200°C/min, and after reaching - 60°C, the temperature was maintained for 1 minute. Then, the temperature was raised to 250°C at a temperature-raising rate of 20°C/min, and the melting point (Tm, °C) and the glass transition temperature (Tg, °C) were calculated. The results are shown in Table 1. In Table 1, the expression "NA" means unmeasurable. Usually, when the melting point Tm or the glass transition point Tg is measured by a differential scanning calorimeter (DSC), the detection is performed by using an inflection point of an endothermic curve or an exothermic curve with respect to temperature. However, in the case of a polysaccharide ester having relatively low crystallinity, an endothermic curve or an exothermic curve with respect to temperature may not show a clear peak, which makes it impossible to identify an inflection point. Although the composition of the present disclosure may be identified by the Tg value, the Tm value is useful in knowing the thermal properties of the composition, and the Tm value can be predicted from the Tg and other parameters even when direct derivation of the Tm value from the inflection point is impossible.

**[Table 1]**

| | β-glucan type | Overall degree of substitution DSs+DSl | Short-chain component type | Long-chain component type | Carbon chain ratio DSs : DSl | Tg(°C) | Tm(°C) |
|---|---|---|---|---|---|---|---|
| Example 1 | Paramylon | 3 | Pr (C3) | He (C6) | 2.7:0.3 | 102 | 183 |
| Example 2 | Cellulose | 3 | Pr (C3) | He (C6) | 1.9:1.1 | 100 | NA |
| Comparative Example 1 | Paramylon | 3 | Pr (C3) | St (C18) | 2.6:0.4 | NA | NA |
| Comparative Example 2 | Paramylon | 3 | Pr (C3) | He (C6) | 1.8:1.2 | 75 | 161 |
| Comparative Example 3 | Paramylon | 3 | Pr (C3) | He (C6) | 1.8:1.2 | 73 | 158 |
| Comparative Example 4 | Cellulose | 3 | Pr (C3) | He (C6) | 1.8:1.2 | 93 | NA |

The β glucan ester derivatives of the above Examples and Comparative Examples were injection-molded to prepare samples for measurements of physical properties. The injection molding machine used was MiniJet Pro (manufactured by Scientific Thermofisher). The injection pressure was 900 bar for 10 sec, and the holding pressure was 250 bar for 10 sec. The sample mold used for the Charpy test described below was 80 mm in length, 12.5 mm in width, and 2.5 mm in thickness (giving strip pieces).

### Measurement of Flexural Strength and Flexural Modulus

The flexural strength at 23°C and 80°C and the flexural modulus at 23°C and 80°C were measured using the molded samples of each of the above Examples and Comparative Examples. The measurement was performed in accordance with JIS K 7171 except that the thickness of the test piece was set to 2.6±0.2 mm. The measurement was performed with n = 3, and the average value was calculated. The results are shown in Table 2.

### Temperature Dependency of Flexural Strength and Flexural Modulus

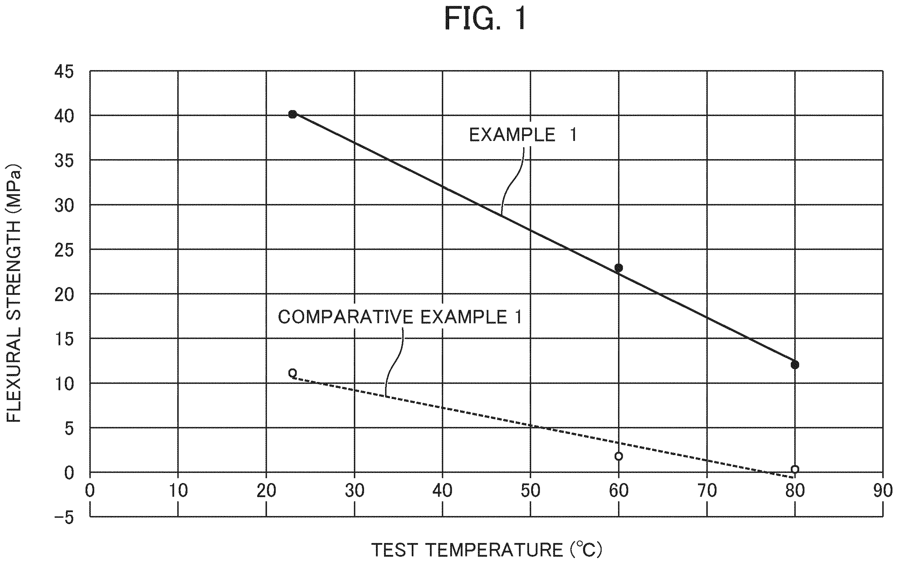

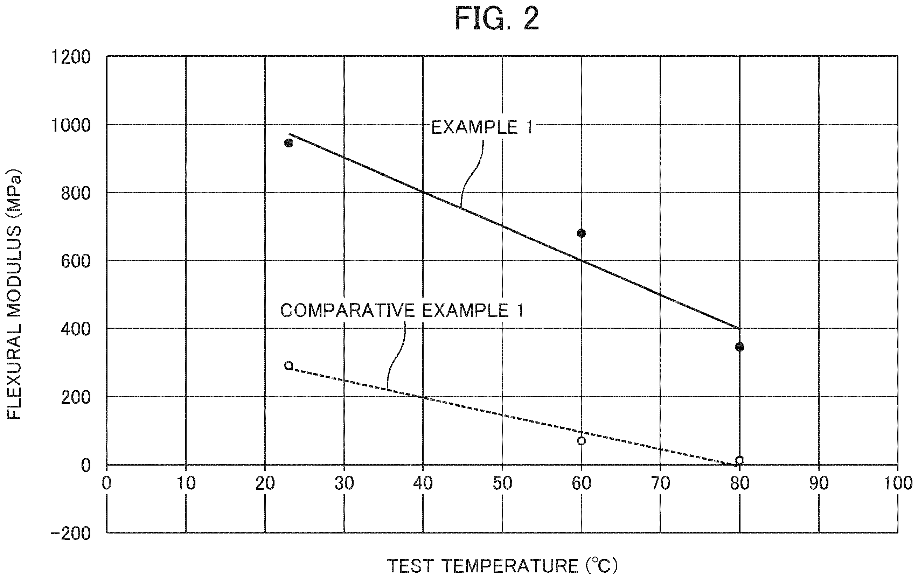

FIG. 1 shows the flexural strengths of the β glucan ester derivatives of Example 1 and Comparative Example 1 at the test temperatures of 23°C, 60°C and 80°C. Similarly, FIG. 2 shows the flexural moduli of Example 1 and Comparative Example 1 at the test temperatures of 23°C, 60°C, and 80°C. From the results in FIGS. 1 and 2, it is apparent that the flexural strengths and flexural moduli of the β glucan ester derivatives of Example 1 and Comparative Example 1 are substantially proportional to the test temperature.

### Flexural Strength at 80°C and Flexural Modulus at 80°C in β glucan ester derivative Having Short-Chain Components of C3 and Long-Chain Component of C8

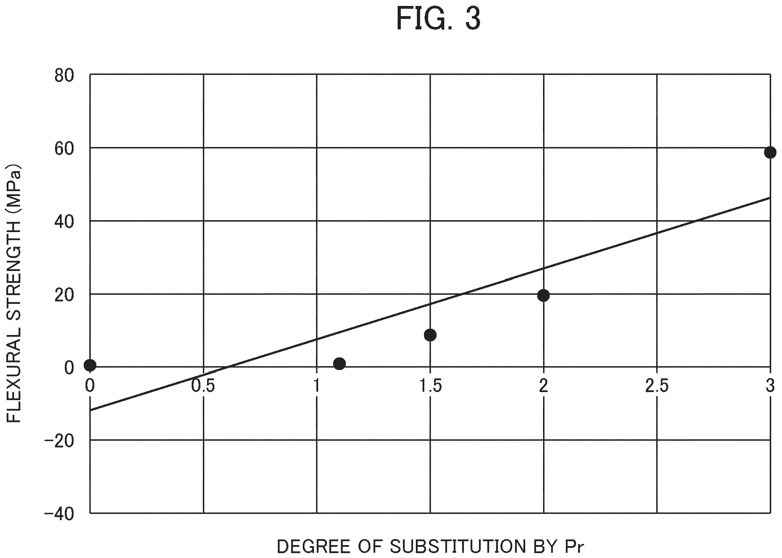

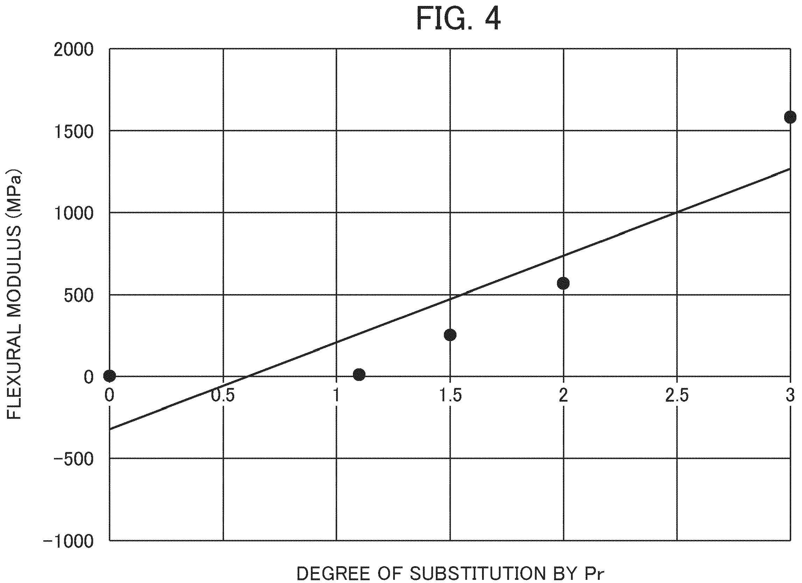

FIGS. 3 and 4 show the flexural strengths at 23°C and the flexural moduli at 23°C of paramylon ester derivatives, which are β glucan ester derivatives, when the degree of substitution by a short-chain component and the degree of substitution by a long-chain component are varied. The paramylon ester derivatives used in FIGS. 3 and 4 had substitutions by a propionyl group (Pr, C3) as a short-chain component and an octanoyl group (Oc, C8) as a long-chain component. The overall degree of substitution was designated as 3. The horizontal axes of the graphs in FIGS. 3 and 4 represent the degree of substitution by Pr as a short-chain component, the vertical axis of the graph in FIG. 3 represents the flexural strength at 23°C, and the vertical axis of the graph in FIG. 4 represents the flexural modulus at 23°C. From the results in FIGS. 3 and 4, it is apparent that the flexural strength and the flexural modulus are substantially proportional to the degree of substitution by Pr.

The β glucan ester derivative of Example 1 having a short-chain component of C3 and a long-chain component of C6, and the β glucan ester derivative having a short-chain component of C3 and a long-chain component of C8 show similar behavior in strength and thermal properties, since the long-chain components C6 and C8 are close to each other in chain length. From the results in FIGS. 3 and 4, it is apparent that the degree of substitution by Pr (overall degree of substitution = 3) of the β glucan ester derivative having a short-chain component of C3 and a long-chain component of C8 at which the flexural strength and flexural modulus thereof comparable to the flexural strength (40 MPa) at 23°C and the flexural modulus (945 MPa) at 23°C of the β glucan ester derivative of Example 1 having a short-chain component of C3 and a long-chain component of C6 are provided is about 2.5. Therefore, in the β glucan ester derivative having a short-chain component of C3 and a long-chain component of C8 with the degree of substitution of Pr being set to 2.5 (i.e., Dss:Dsl = 2.5:0.5), the flexural strength and flexural modulus at 80°C for the long-chain component of C8 can be determined from the relationship between the temperature and the mechanical properties shown in FIGS. 1 and 2. Specifically, the flexural strength at 80°C of the β glucan ester derivative having a short-chain component of C3 and a long-chain component of C8 with a Dss:Dsl = 2.5:0.5 corresponds to a value on the vertical axis (flexural strength) on the straight line shown in FIG. 1 at a value of 80°C in the horizontal axis (temperature), and can thus be found to be 12 MPa. Similarly, the flexural modulus at 80°C corresponds to a value on the vertical axis (flexural modulus) on the straight line shown in FIG. 2 at a value of 80°C in the horizontal axis (temperature), and can thus be found to be 398 MPa.

### Measurement of Flexural Strength after Water Absorption and Flexural Modulus after Water Absorption

Molded samples of each of the above Examples and Comparative Examples were immersed in pure water at 80°C for 20 hours, and then the flexural strength and the flexural modulus were measured under the same conditions as described above at 23°C and 80°C. The measurement was performed with n = 3, and the average value was calculated. The results are shown in Table 2.

### Charpy Impact Test

The Charpy impact value was measured using the molded samples of each of the above Examples and Comparative Examples. The measurement was performed in accordance with JIS K 7111. Edgewise impact test pieces were prepared as test pieces, and the Charpy notched impact strength was measured. The measurement was performed with n = 5, and the average value was calculated. The results are shown in Table 2.

### Heat Distortion Temperature (HDT)

The heat distortion temperature was measured using the molded samples of each of the above Examples and Comparative Examples. The measurement was performed in accordance with JIS K 7191-2. A constant flexural load (1.80 MPa) was applied to the center of the 80 mm × 12 mm × 2.5 mm test piece (flatwise direction), the temperature was raised at a constant rate (120°C/h), and the temperature (°C) at which the strain in the center portion reached a predetermined distortion (0.55 to 0.57 mm) was measured. The measurement was performed with n = 3, and the average value was calculated. HDT of 48°C or higher was acceptable. Heat distortion tester No. 148-HD-PC (manufactured by Yasuda Seiki Seisakusho, Ltd.) was used for the measurement. The results are shown in Table 2.

**[Table 2]**

| | Flexural strength [MPa] | Flexural strength at 80°C [MPa] | Flexural strength after water absorption [MPa] | Flexural modulus [MPa] | Flexural modulus at 80°C [MPa] | Flexural modulus after water absorption [MPa] | Charpy impact strength [kJ/m²] | Heat distortion temperature HDT [°C] |
|---|---|---|---|---|---|---|---|---|
| Example 1 | 40 | 12 | - | 945 | 346 | - | 5.6 | 60 |
| Example 2 | 36 | 9.6 | 38 | 1040 | 592 | 1030 | 10.0 | 55 |
| Comparative Example 1 | 11 | 0.3 | - | 291 | 12 | - | 11 | 35 |
| Comparative Example 2 | 25 | 0.6 | 26 | 767 | 121 | 675 | 8.5 | 46 |
| Comparative Example 3 | 23 | 0.6 | 25 | 743 | 62 | 673 | 9.7 | 45 |
| Comparative Example 4 | 36 | 7.5 | 34 | 1070 | 638 | 927 | 12.1 | 53 |

From the results of the Examples and Comparative Examples, it is apparent that the β glucan ester derivatives according to Examples have a higher flexural strength at 80°C and a higher flexural modulus at 80°C, and thus exhibit more excellent heat resistance than the β glucan ester derivatives according to Comparative Examples. In addition, it is apparent that a preferable water resistance, rigidity, and flexibility can be achieved and these can be concurrently exerted.

## Claims

1. A β glucan ester derivative having an acyl group having 3 carbon atoms, and an acyl group having 6 to 8 carbon atoms, wherein
the β glucan ester derivative is a β-1,3-glucan ester derivative or a β-1,4-glucan ester derivative, and
the β glucan ester derivative has a flexural strength at 80°C of 8 MPa or more and a flexural modulus at 80°C of 250 MPa or more.

2. The β glucan ester derivative according to claim 1, wherein the β glucan ester derivative has a structure in which at least some of hydrogen atoms of hydroxyl groups of the β-glucan ester are substituted by the acyl group having 3 carbon atoms and the acyl group having 6 to 8 carbon atoms.

3. The β glucan ester derivative according to claim 1 or 2, having a Tg of 100°C or higher.

4. The β glucan ester derivative according to any one of claims 1 to 3, wherein when DSs:DSl is a ratio of a degree of substitution DSs by the acyl group having 3 carbon atoms to a degree of substitution DSl by the acyl group having 6 to 8 carbon atoms,
the DSs:DSl is 2.5:0.5 to 2.8:0.2 in the β-1,3-glucan ester derivative, and
the DSs:DSl is 1.2:1.8 to 2.1:0.9 in the β-1,4-glucan ester derivative.
